# EUROPÄISCHE PATENTSCHRIFT

(11) **EP 2 587 150 B1**
(45) Veröffentlichungstag und Bekanntmachung des Hinweises auf die Patenterteilung: **21.08.2019**
(21) Anmeldenummer: 12182769.5
(22) Anmeldetag: 03.09.2012
(51) Int. Cl.: F23K 3/00, B65G 65/48

(54) **Vorrichtung zum Austragen von Schüttgut**
Device for extracting bulk material
Dispositif d'extraction de produits en vrac

(30) Priorität: 28.10.2011 AT 15912011
(43) Veröffentlichungstag der Anmeldung: 01.05.2013
(73) Patentinhaber: HARGASSNER Ges mbH, 4952 Weng (AT)
(72) Erfinder: Hargassner, Anton, 4952 Weng (AT)
(74) Vertreter: Patentanwaltskanzlei Hübscher

(56) Entgegenhaltungen:
- WO-A1-2004/054908
- DE-A1- 1 801 505
- DE-A1- 3 333 115
- FR-A1- 2 034 857
- US-A- 3 233 755
- US-A- 5 271 704

## Beschreibung

Die Erfindung betrifft eine Vorrichtung zum Austragen von Schüttgut, insbesondere Biomasseschüttgut, aus einem Lagerraum mit einem lagerraumbodenseitigen, Austragsarme tragenden drehangetriebenen Rotor, dessen Austragsarme das Schüttgut einem Förderer zuführen, wobei der Rotor kopfseitig von einer drehbar am Rotor gelagerten Drehscheibe überdeckt ist.

Solche Vorrichtungen dienen zur Austragung von Schüttgut aus Lagerräumen, insbesondere aus Bunker oder Silos, zwecks Zuleitung zu einer Feuerung. Beim Schüttgut handelt es sich insbesondere um Biomasseschüttgut, wie Hackschnitzel, Pellets, Sägemehl oder dgl. Der Förderer, dem die drehangetriebenen Austragsarme das Schüttgut zuleiten, ist üblicherweise eine, in einem nach oben offenen Gehäuse angeordnete, Förderschnecke, die das Schüttgut bei der Feuerung dosiert zuführt. Die mit dem Rotor rotierenden Austragsarme haben die Aufgabe das über die Lagerraumgrundfläche verteilte Schüttgut der nach oben offenen Förderschnecke zuzuleiten. Der die Austragsarme tragende drehangetriebene Rotor wird typischerweise von einem Winkelgetriebe an der Förderschnecke angetrieben. Um das Rotordrehmoment und die benötigte Antriebsleistung dabei gering zu halten, sind die Austragsarme entweder flexibel, nach Art von Blattfedern, oder aber knickbar ausgeführt. Die Austragsarme können sich bei ausreichend befülltem Lagerraum zum Rotor hin einziehen bzw. bei sich drehendem Rotor um den Rotor wickeln, wobei sie gegebenenfalls zumindest teilweise unter der Drehscheibe verschwinden.

Die Drehscheibe ist gemäß dem Stand der Technik entweder drehfest mit dem Rotor bzw. mit den Austragsarmen verbunden, rotiert also stets mit der gleichen Drehgeschwindigkeit wie der Rotor oder aber sie ist freilaufend am Rotor gelagert.

Die Dokumente US 3 233 755 A, US 5 271 704 A, DE 18 01 505 A1, WO 2004/054908 A1 und FR 2 034 857 A1 offenbaren ebenfalls eine solche Vorrichtung.

In diesem Fall wird die Drehscheibe über ein Lager, insbesondere ein Gleitlager, nach unten hin am Rotor abgestützt. Ein Vorteil der freilaufenden Drehscheibe liegt darin, dass diese bei entsprechender Auflast von der Auflast gebremst stehen bleiben kann und kein zusätzliches Antriebsdrehmoment für deren Rotation bzw. für die Bewegung des daraufliegenden Schüttgutes aufgebracht werden muss. Von Nachteil ist es aber, dass es in Abhängigkeit von der Schüttgutkonsistenz, bzw. bei schwer rieselfähigem Material vermehrt zu einer sogenannten Brückenbildung, einer Ausbildung eines Gewölbes im Lagerraum, kommt, die einen automatischen, vollständigen Austrag von Schüttgut aus dem Lagerraum unterbindet und zusätzliche Maßnahmen zur Überwindung der Brückenbildung erfordert. Die Austragsarme können sich unter einer entstehenden Brücke freilaufen, wodurch die Intensität der Austragung reduziert bzw. vollständig unterbrochen wird und die Förderschnecke nicht mehr ordnungsgemäß mit Schüttgut versorgt wird.

Einer derartigen Brückenbildung kann mit einer drehfest am Rotor bzw. gegenüber den Austragsarmen gehaltenen Drehscheibe entgegengewirkt werden, da die Drehscheibe das darauf abgelegte Schüttgut mitbewegt, was Brückenbildungsneigungen unterbindet. Eine derartige Konstruktion hat allerdings den Nachteil, dass sie insbesondere bei vollgefülltem Lagerraum ein erhöhtes Anfahrdrehmoment für die Bewegung der noch ausgefahrenen Arme und der Drehscheibe überwinden muss. Das Anfahren nach der Befüllung eines vorher annähernd leeren Lagerraums ist wie bei allen Varianten der Raumaustragung besonders kritisch. Die Arme sind vollständig ausgefahren und mit der Last des Schüttguts beaufschlagt. Das beim Anfahren benötigte Drehmoment um die Austragsarme unter die Drehscheibe einzuziehen, ist das höchste auftretende in sämtlichen Betriebszuständen und bestimmt somit die Parameter zur Auslegung des Getriebes. Muss bei diesem Anfahren noch zusätzlich die Drehscheibe mitbewegt werden, führt dies zu kurzzeitig auftretenden, sehr hohen Drehmomenten, was zum Bruch des Getriebes oder einer Antriebswelle führen kann. Das Getriebe und der gesamte Antriebsstrang müssen somit entsprechend stark dimensioniert werden, was sich negativ auf Anschaffungs- und Betriebskosten der Raumaustragung auswirkt.

Aufgabe der vorliegenden Erfindung ist es somit, eine Vorrichtung der eingangs geschilderten Art zu schaffen, die das Anfahrmoment des Rotors nach einer Befüllung eines vorher annähernd leeren Lagerraums möglichst gering hält und dabei dennoch einer Brückenbildung im Schüttgut sicher entgegenwirkt.

Die Erfindung löst diese Aufgabe dadurch, dass die Drehscheibe in Abhängigkeit der sie bremsenden Schüttgutauflast gegenüber dem Rotor um einen begrenzten Drehwinkel zurückbleibt und dass der Rotor ein Drehkreuz umfasst, dessen Drehkreuzarmen die Austragsarme zugeordnet sind, wobei wenigstens einem Drehkreuzarm ein Mitnehmer für wenigstens einen von der Drehscheibenunterseite abragenden Anschlag zugeordnet ist.

Die Erfindung verbindet somit die Vorteile einer freidrehenden und einer mit Austragsarmen fix verbundenen und mitrotierenden Drehscheibe. Mit der Erfindung kann das Anfahrmoment dadurch reduziert werden, dass die Drehscheibe zumindest während des Anfahrens nicht mit dem Rotor mitrotieren muss, sondern erst zu einem späteren Zeitpunkt mitrotiert, zudem die Austragsarme zumindest um ein gewünschtes Maß wieder eingefahren sind und somit das Anfahrdrehmoment entsprechend reduziert wurde. Bleibt die Drehscheibe gegenüber dem Rotor zurück ist es insbesondere vorgesehen, dass sich eine Rückstellkraft aufbaut, welche die nicht oder nur wenig belastete Drehscheibe in weiterer Folge wieder in die Leerlaufposition zurückverlagert. Die Rückstellkraft kann ein Federspeicher sein oder schwerkraftbedingt generiert werden.

Zu diesem Zweck umfasst der Rotor ein Drehkreuz, dessen Drehkreuzarme die Austragsarme zugeordnet sind, wobei wenigstens einem Drehkreuzarm ein Mitnehmer für wenigstens einen von der Drehscheibenunterseite abragenden Anschlag zugeordnet ist. Mit diesen Merkmalen ergibt sich eine besonders einfache, robuste Konstruktion. Dazu ist der Drehscheibenunterseite der Anschlag und dem Drehkreuzarm ein Mitnehmer zugeordnet, der beim Anfahren den gewünschten Freiraum erlaubt.

Eine Federrückstellung dreht die Drehscheibe nach der Entleerung des Lagerraums beispielsweise bis zu einem zweiten Anschlag wieder in eine definierte Ausgangsstellung zurück. Die Funktion des zweiten Anschlags kann prinzipiell auch der Mitnehmer erfüllen. Die Wahl des freien Drehwinkels obliegt naturgemäß dem Fachmann, der je nach Konstruktion beispielsweise rund 180°, 360° oder dgl. betragen kann.

Die gegebenenfalls um ein Zugmittel verlängerte Feder kann dabei einerends an einem Drehkreuzarm und anderends an der Drehscheibe angreifen. So besteht die Möglichkeit, dass sich das Zugmittel bzw. die Feder bei einem Verschwenken der Drehscheibe gegenüber dem Rotor um den Rotor wickeln und diese nach einer Entlastung der Drehscheibe wieder in die Ausgangslage zurückziehen kann.

Wurde der Lagerraum nach einer Heizperiode zumindest nahezu entleert, sind die Austragsarme möglicherweise begrenzt durch die Wand des Lagerraums, vollständig ausgefahren. Die zu diesem Zeitpunkt freistehende und unbelastete Drehscheibe befindet sich definiert durch einen Anschlag am Drehkreuz und durch eine Federrückstellung in einer Leerlaufposition relativ zum Drehkreuz. Ist der Lagerraum zu einem späteren Zeitpunkt vollgefüllt und wird die Austragung aktiviert, so beginnt sich das Drehkreuz mit den Armen zu bewegen, wobei sich die Arme einziehen. Durch die Belastung der Drehscheibe mit Schüttgut und durch den Widerstand von vorzugsweise an der Drehscheibenoberseite vorgesehenen und quer zur Scheibenrichtung ausgerichteten Räumleisten wird die Drehscheibe von der Auflast zurückgehalten. Das Drehkreuz bzw. der Rotor kann sich unter der Drehscheibe frei bewegen und es ist somit kein zusätzliches Antriebsmoment zur Bewegung der Drehscheibe nötig. Nachdem der Rotor einen zum Einziehen der Austragsarme erforderlichen Drehwinkel verdreht wurde, wird die Drehscheibe vom Rotor mitgenommen. Erst jetzt ist das für die Bewegung der Drehscheibe unter der Last des Schüttguts erforderliche, zusätzliche Antriebsmoment erforderlich. Zu diesem Zeitpunkt unterstützen die Räumleisten ein Entgegenwirken der Brückenbildung. In der Folge der fortschreitenden Entleerung des Lagerraums kann sich dann die Drehscheibe wieder frei drehen und wird durch die Zugfeder in die Leerlaufposition zurückgedreht.

In der Zeichnung ist die Erfindung anhand eines Ausführungsbeispiels schematisch dargestellt. Es zeigen
- Fig. 1: einen teilgeschnittenen Querschnitt durch eine erfindungsgemäße Vorrichtung,
- Fig. 2: einen Ausschnitt eine Vorrichtung aus Fig. 1 in teilgeschnittener Draufsicht mit in Ausgangsposition verdrehter Drehscheibe und
- Fig. 3: die Vorrichtung aus Fig. 1 mit in Anschlagposition verdrehter Drescheibe.

Eine erfindungsgemäße Vorrichtung zum Austragen von Schüttgut 1, insbesondere Hackschnitzel oder Pellets, umfasst einen Lagerraum 2 mit einem lagerraumbodenseitigen, Austragsarme 3 tragenden drehangetriebenen Rotor 4, dessen Austragsarme 3 das Schüttgut 1 einem Förderer 5, einem Schneckenförderer mit nach oben offener Förderschnecke, zuführen. Der Rotor 4 ist kopfseitig von einer drehbar am Rotor 4 gelagerten Drehscheibe 6 überdeckt. Gemäß der Erfindung bleibt die Drehscheibe 6 in Abhängigkeit der sie zurückhaltenden Schüttgutauflast unter Vorspannung einer Feder 7 gegenüber dem Rotor 4 um einen bremskraftabhängigen begrenzten Drehwinkel zurück.

Dazu umfasst der Rotor 4 gemäß dem Ausführungsbeispiel ein Drehkreuz 8, an dessen Drehkreuzarmen die Austragsarme 3 befestigt sind, wobei wenigstens einem Drehkreuzarm ein Mitnehmer 9 für wenigstens einen von der Drehscheibenunterseite abragenden Anschlag 10 zugeordnet ist. Die Feder 7 ist über ein Zugmittel verlängert und greift einerends an einem Drehkreuzarm und andernends an der Drehscheibe 6, insbesondere an einem schematisch dargestellten, von der Drehscheibenunterseite abragenden Zapfen 11 an. Der Drehscheibenoberfläche sind quer zur Scheibendrehrichtung ausgerichtete Räumleisten 12 zugeordnet.

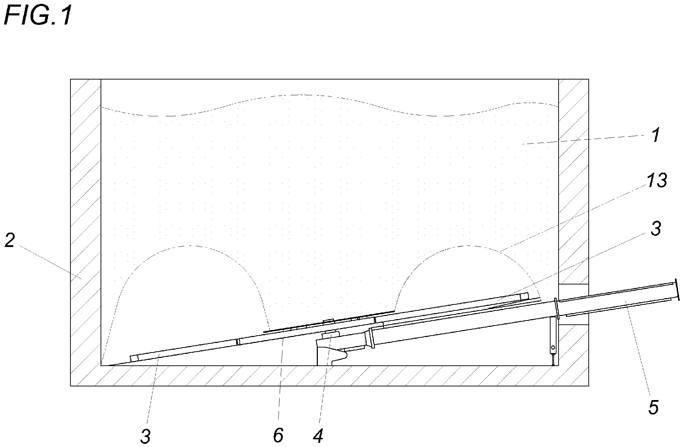

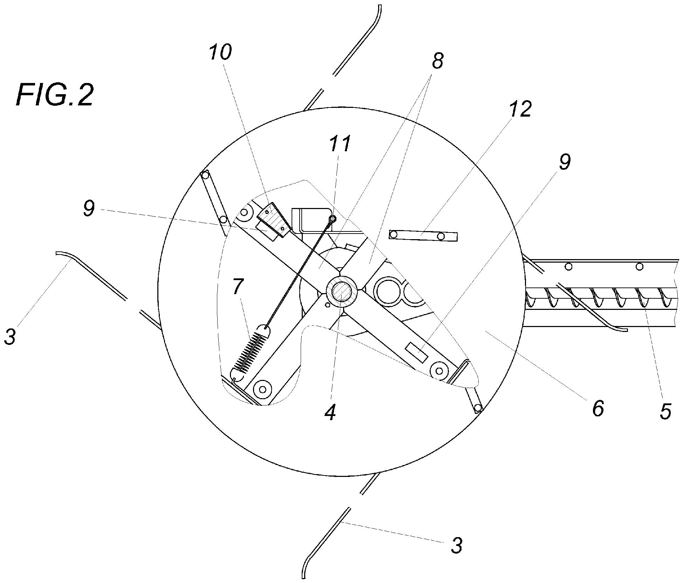

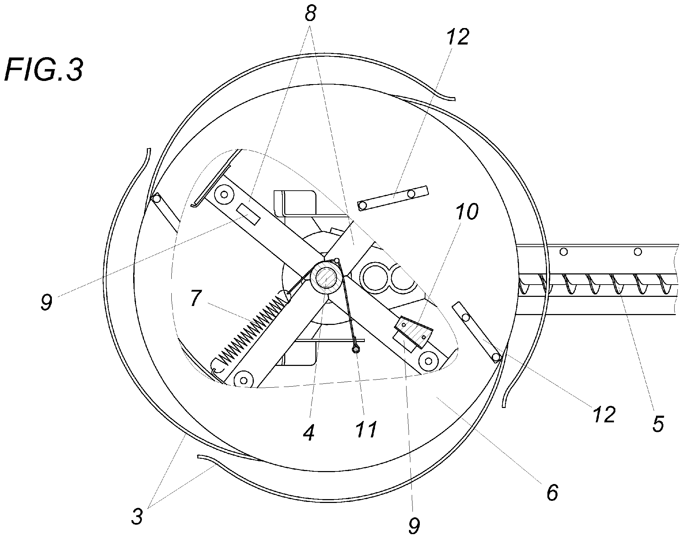

In einem leeren Lagerraum 1 sind die Austragsarme 3 zunächst vollständig ausgefahren (Fig. 2). Die freistehende und unbelastete Drehscheibe befindet sich durch den Anschlag 10 und den Mitnehmer 9 durch die Federrückstellung in einer definierten Leerlaufposition. Wird der Lagerraum befüllt und wird anschließend die Austragung aktiviert, beginnt sich das Drehkreuz mit den Armen zu drehen. Durch die Drehbewegung werden die vom Schüttgut zurückgehaltenen Austragsarme eingezogen, wobei die Drehscheibe durch die Bremskraft des aufruhenden Schüttgutes solange unter Spannung der Feder 7 zurückgehalten wird, bis der Anschlag 10 an einem zweiten Mitnehmer 9 anliegt (Fig. 3). Im dargestellten Ausführungsbeispiel ist eine freie Verdrehung der Drehscheibe 6 um rund 180° möglich, kann sich das Drehkreuz also um rund eine halbe Umdrehung frei bewegen, bevor die Drehscheibe von Mitnehmer und Anschlag mitgenommen wird. Die in Fig. 1 angedeutete Brückenbildung 13 im Schüttgut 1 kann durch diese Maßnahmen sicher vermieden werden. Ein weiterer wesentlicher Vorteil der Erfindung liegt darin, dass das maximale Drehmoment und die maximal erforderliche Antriebsleistung in einfacher Weise reduziert werden kann.

## Patentansprüche

1. Vorrichtung zum Austragen von Schüttgut (1), insbesondere Biomasseschüttgut, aus einem Lagerraum (2) mit einem lagerraumbodenseitigen, Austragsarme (3) tragenden drehangetriebenen Rotor (4), dessen Austragsarme (3) das Schüttgut (1) einem Förderer (5) zuführen, wobei der Rotor (4) kopfseitig von einer drehbar am Rotor (4) gelagerten Drehscheibe (6) überdeckt ist,
wobei die Drehscheibe (6) in Abhängigkeit der sie bremsenden Schüttgutauflast gegenüber dem Rotor (4) um einen begrenzten Drehwinkel zurückbleibt und dass der Rotor (4) ein Drehkreuz (8) umfasst, dessen Drehkreuzarmen die Austragsarme (3) zugeordnet sind, und wobei wenigstens einem Drehkreuzarm ein Mitnehmer (9) für wenigstens einen von der Drehscheibenunterseite abragenden Anschlag (10) zugeordnet ist.

2. Vorrichtung nach Anspruch 1, **dadurch gekennzeichnet, dass** eine gegebenenfalls um ein Zugmittel verlängerte Feder (7) einerends an einem Drehkreuzarm und andernends an der Drehscheibe (6) angreift.

3. Vorrichtung Anspruch 1 oder 2, **dadurch gekennzeichnet, dass** der Drehscheibenoberseite wenigstens eine quer zur Scheibendrehrichtung ausgerichtete Räumleiste (12) zugeordnet ist.

## Claims

1. Apparatus for discharging bulk material (1), in particular biomass bulk material, from a storage space (2) having a storage space bottom-side rotor (4) which supports discharge arms (3), is rotationally driven and of which the discharge arms (3) supply the bulk material (1) to a conveyor (5), wherein the rotor (4) is covered on the head side by a rotary disk (6) mounted rotatably on the rotor (4), wherein, in dependence upon the bulk material load braking the rotary disk (6), said rotary disk lags behind with respect to the rotor (4) by a limited rotation angle and that the rotor (4) comprises a star handle (8), of which the star handle arms are allocated the discharge arms (3), and wherein at least one star handle arm is allocated an entrainer (9) for at least one stop (10) protruding from the rotary disk underside.

2. Apparatus as claimed in claim 1, **characterised in that** a spring (7) which is optionally extended by a traction means acts at one end upon a star handle arm and acts at the other end upon the rotary disk (6).

3. Apparatus as claimed in claim 1 or 2, **characterised in that** the rotary disk upper side is allocated at least one clearing strip (12) which is oriented transversely to the rotational direction of the disk.

## Revendications

1. Dispositif d'extraction de produits en vrac (1), notamment de biomasse en vrac, à partir d'un espace d'entrepôt (2) avec un rotor (4) entraîné en rotation et portant des bras d'extraction (3) côté fond de l'espace d'entrepôt, dont les bras d'extraction (3) amènent le produit en vrac (1) à un convoyeur (5), le rotor (4) étant recouvert côté tête par un disque rotatif (6) monté tournant au niveau du rotor (4), dans lequel le disque rotatif (6) reste autour d'un angle de rotation limité en fonction de la charge de produit en vrac le freinant par rapport au rotor (4) et le disque rotatif (6) comprend un tourniquet (8), les bras d'extraction (3) étant affectés aux bras du tourniquet et dans lequel un entraîneur (9) est associé au moins à un bras de tourniquet pour au moins une butée (10) faisant saillie du côté inférieur du disque rotatif.

2. Dispositif selon la revendication 1, **caractérisé en ce qu'**un ressort (7) prolongé le cas échéant par un moyen de traction vient en prise au niveau d'un bras du tourniquet, à une extrémité et au niveau du disque rotatif (6), à l'autre extrémité.

3. Dispositif selon la revendication 1 ou 2, **caractérisé en ce qu'**au moins une lame (12) orientée transversalement à la direction de rotation du disque est associée au côté supérieur du disque rotatif.
